# EUROPÄISCHE PATENTSCHRIFT

(11) **EP 3 851 801 B1**
(45) Veröffentlichungstag und Bekanntmachung des Hinweises auf die Patenterteilung: **28.08.2024**
(21) Anmeldenummer: 21151544.0
(22) Anmeldetag: 14.01.2021
(51) Int. Cl.: G01C 21/34, B60W 60/00, G01C 21/00, B60W 40/02

(54) **VERFAHREN ZUR BESTIMMUNG EINER NAVIGATIONSROUTE FÜR EIN FAHRZEUG**
METHOD FOR PRODUCING A NAVIGATION ROUTE FOR A VEHICLE
PROCÉDÉ DE DÉTERMINATION D'UN ITINÉRAIRE DE NAVIGATION POUR UN VÉHICULE

(30) Priorität: 15.01.2020 DE 102020200460
(43) Veröffentlichungstag der Anmeldung: 21.07.2021
(73) Patentinhaber: VOLKSWAGEN AG, 38440 Wolfsburg (DE)
(72) Erfinder: Kruscha, Tatjana, 38106 Braunschweig (DE); Kempa, Jan, 38440 Wolfsburg (DE); Bruns, Christian, 38104 Braunschweig (DE); Schröder, Marvin, 38118 Braunschweig (DE)

(56) Entgegenhaltungen:
- CN-A- 109 974 710
- DE-A1- 102018 006 219
- JP-A- 2006 300 571
- US-A1- 2018 135 997

## Beschreibung

Verfahren zur Bestimmung einer Navigationsroute für ein Fahrzeug Die vorliegende Erfindung betrifft ein Verfahren zur Bestimmung einer Navigationsroute für ein Fahrzeug. Ferner bezieht sich die Erfindung auf eine Vorrichtung zur Bestimmung einer Navigationsroute für ein Fahrzeug.

Es ist aus dem Stand der Technik bekannt, dass eine Zielführung eines Navigationssystems eines Fahrzeuges unter Beachtung bestimmter Kriterien durchgeführt wird. So wird bspw. in den Druckschriften DE 10 2014 210 496 A1 und DE 10 2017 218 779 A1 eine Blendungswahrscheinlichkeit als Kriterium für die Routenbewertung berücksichtigt. Weitere beispielhafte Navigationssysteme sind aus den Schriften US 2018/135997 A1 und JP 2006 300571 A bekannt. CN 109 974 710 A offenbart ein Verfahren zur Berechnung einer Route unter Berücksichtigung der Beleuchtung an den jeweiligen Straßenabschnitten, wobei der Schwellwert der Lichtintensität von dem Benutzer vorher definiert werden kann.

Dennoch können die hierbei ermittelten Routen für einen Nutzer des Fahrzeuges nicht optimal sein. So führt die Routenbewertung möglicherweise dazu, dass die Zielführung entlang nicht ausreichend beleuchteter Routen erfolgt. Der Nutzer muss dann während der Navigation von den ermittelten Routen abweichen, um eine zufriedenstellende Navigation durchzuführen. Dies verringert den Komfort und die Zuverlässigkeit der Zielführung. Auch kann es möglich sein, dass die Beleuchtung zu intensiv ist, da der Nutzer aus Komfortgründen eine geringere Helligkeit bevorzugt.

Es ist daher eine Aufgabe der vorliegenden Erfindung, die voranstehend beschriebenen Nachteile zumindest zu reduzieren. Insbesondere ist es eine Aufgabe der vorliegenden Erfindung, eine Lösung für eine verbesserte Routenbestimmung vorzuschlagen.

Die voranstehende Aufgabe wird gelöst durch ein Verfahren mit den Merkmalen des Anspruchs 1 und durch eine Vorrichtung mit den Merkmalen des Anspruchs 8. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein, vorzugsweise computerimplementiertes, Verfahren zur Bestimmung einer Navigationsroute (zur Fahrzeugnavigation) für ein Fahrzeug, bei welchem die nachfolgenden Schritte durchgeführt werden, vorzugsweise nacheinander oder in beliebiger Reihenfolge oder auch zumindest teilweise gleichzeitig, wobei die Schritte auch wiederholt durchgeführt werden können:
- Bereitstellen, insbesondere durch ein, z. B. elektronisches, Verarbeitungsmittel, wenigstens einer und insbesondere mehrerer Straßenabschnittinformation(en) über jeweils wenigstens einen durch das Fahrzeug zu befahrende und/oder befahrbare Straßenabschnitts für die zu bestimmende Navigationsroute,
- Ermitteln, insbesondere durch ein Abrufmittel, wenigstens einer Beleuchtungsinformation für die zu bestimmende Navigationsroute, wobei die wenigstens eine ermittelte Beleuchtungsinformation für eine Beleuchtung des wenigstens einen Straßenabschnitts bzw. der Straßenabschnitte, und insbesondere zusätzlich für die Beleuchtung wenigstens einer Umgebung außerhalb und insbesondere angrenzend des wenigstens einen Straßenabschnitts bzw. der Straßenabschnitte, spezifisch ist,
- Berechnen, insbesondere durch ein Berechnungsmittel, der Navigationsroute (d. h. Routenberechnung) anhand der bereitgestellten Straßenabschnittsinformationen und der ermittelten Beleuchtungsinformation, insbesondere auch unter Berücksichtigung der Beleuchtung der wenigstens einen Umgebung außerhalb des wenigstens einen Straßenabschnitts bzw. der Straßenabschnitte, vorzugsweise um die Navigationsroute in der Art einer beleuchtungsoptimierten Route zu bestimmen.

Es ist ferner erfindungsgemäß vorgesehen, dass eine Benutzervoreinstellung bereitgestellt wird, insbesondere durch das Verarbeitungsmittel und/oder durch eine Eingabe eines Benutzers des Fahrzeuges, vorzugsweise an einem Navigationsgerät des Fahrzeuges. Hierbei wird bei dem Berechnen der Navigationsroute durch einen Vergleich der Benutzervoreinstellung mit der wenigstens einen ermittelten Beleuchtungsinformation eine Auswahl und Bewertung der bereitgestellten Straßenabschnittsinformationen für die Bestimmung der Navigationsroute durchgeführt. In anderen Worten kann einen Benutzerwunsch für die Beleuchtung voreingestellt und bei der Berechnung der Navigationsroute berücksichtigt werden. Dies hat den Vorteil, dass die Benutzervoreinstellung eine Auswahl einer gewünschten Beleuchtung für die Navigationsroute ermöglicht. Durch die Auswahl der gewünschten Beleuchtung der Fahrbahn und/oder des gewünschten Zielorts kann für die Navigation eine Komforterhöhung für den Benutzer des Fahrzeuges möglich sein. Die Benutzervoreinstellung kann nicht-flüchtig und damit dauerhaft in einer Speichervorrichtung des Fahrzeuges gespeichert und durch das Verarbeitungsmittel abgerufen werden.

Der Benutzer des Fahrzeuges, nachfolgend auch kurz als Nutzer bezeichnet, kann dabei ein Insasse und/oder Fahrer des Fahrzeuges sein. Es kann vorgesehen sein, dass das Fahrzeug als autonomes Fahrzeug, d. h. ein autonom fahrendes Fahrzeug, ausgebildet ist, sodass kein Fahrer zwingend vorgesehen sein muss, da das Fahrzeug selbstständig fahren kann. Es kann vorgesehen sein, dass das autonome Fahrzeug automatisch entlang der berechneten Navigationsroute fährt.

Der Nutzer kann bspw. das von ihm gewünschte Beleuchtungslevel für die Route bzw. den Zielort individuell auswählen. Es ist hierbei auch denkbar, dass ein geringeres Beleuchtungslevel ausgewählt wird, wenn z. B. eine bessere Betrachtung des Sternenhimmels gewünscht ist. Das ausgewählte bzw. festgelegte Beleuchtungslevel wird anschließend bei der Auswahl und Bewertung der Navigationsroute berücksichtigt.

Die Benutzervoreinstellung kann vorteilhafterweise nicht-flüchtig in einem Datenspeicher des Fahrzeuges und insbesondere einer erfindungsgemäßen Vorrichtung gespeichert sein. Die Benutzervoreinstellung kann z. B. dadurch bereitgestellt werden, dass die Benutzervoreinstellung, insbesondere vor der Berechnung der Navigationsroute, aus dem Datenspeicher gelesen wird und/oder durch ein Eingabemittel wie ein Touchscreen durch den Nutzer eingegeben wird. Weiter können ggf. auch verschiedene Straßenabschnittsinformationen für alternative Navigationsrouten mit den zugehörigen Beleuchtungsinformationen auf einem Bildschirm, wie dem Touchscreen, z. B. in einer Karte zur Auswahl dargestellt werden, um anhand der Auswahl die Benutzervoreinstellung zu bestimmen.

Weiter kann der Vorteil erzielt werden, dass das Berechnen zur Bestimmung der Navigationsroute für eine Fahrzeugnavigation als Bewertungskriterium die ausreichende Beleuchtung für den Fahrer berücksichtigen kann. Dies basiert auf der Erkenntnis, dass ein Fahrer üblicherweise solche Orte (Routen, Interessenspunkte oder Zielorte) bevorzugt, welche optimal beleuchtet sind. Die Beleuchtung kann durch die Straßenbeleuchtung und/oder sonstige Umgebungsbeleuchtung bestimmt sein, welche die Umgebungshelligkeit des Ortes - insbesondere nachts bzw. bei unzureichendem Tageslicht - beeinflussen. Herkömmliche Navigationssysteme können dabei die Qualität der Straßenbeleuchtung auf einer Route nicht abbilden oder berücksichtigen.

Es ist bei dem erfindungsgemäßen Verfahren ferner möglich, dass die Benutzervoreinstellung eine Vorgabe für eine maximale Intensität der Beleuchtung umfasst, um diese Vorgabe bei der Auswahl und Bewertung zu berücksichtigen. Somit kann der Benutzer vorgeben, dass die maximale Intensität, also insbesondere eine maximale Helligkeit, bei der Navigation nicht überschritten werden soll. Dieses Bewertungskriterium kann somit zur weiteren Komforterhöhung beitragen, wenn bspw. der Nutzer eines autonomen Fahrzeuges während der Fahrt nicht von der Helligkeit gestört werden möchte, oder zum besseren Beobachten der Umgebung oder eines Sternenhimmels.

Ferner ist es vorteilhafterweise vorgesehen, dass die Benutzervoreinstellung als eine Voreinstellung für eine Mehrzahl von Berechnungen der Navigationsroute verwendet wird, um bei den Berechnungen eine minimale und/oder maximale Intensität der Beleuchtung voreinzustellen, um für die Auswahl und Bewertung die wenigstens eine voreingestellte Intensität mit der Beleuchtung zu vergleichen. Dies kann bedeuten, dass eine Straßenabschnittsinformation dann für die Navigationsroute ausgewählt wird, also zur Zusammensetzung der Navigationsroute verwendet wird, wenn bei der Bewertung festgestellt wird, dass die Beleuchtung in dem Straßenabschnitt, für den die Straßenabschnittsinformation spezifisch ist, nicht kleiner als die minimale Intensität und/oder größer als die maximale Intensität ist. Die Straßenabschnittsinformation kann andernfalls bspw. nur dann dennoch für die Navigationsroute ausgewählt werden, wenn keine alternativen Straßenabschnitte verfügbar sind und/oder ein weiteres Bewertungskriterium verletzt wird, wie bspw. eine maximale Routenlänge oder Navigationsdauer.

Das Berechnen der Navigationsroute kann als eine Bestimmung der Navigationsroute, insbesondere durch ein Zusammensetzen der Navigationsroute aus mehreren Straßenabschnitten anhand der Straßenabschnittsinformationen, verstanden werden. Dabei können eine Vielzahl von Straßenabschnittsinformationen bereitgestellt sein, welche alternative Möglichkeiten bieten, um zu einem Zielort zu gelangen. Um die Straßenabschnittsinformationen für die Berechnung der Navigationsroute auswählen, werden alternative Straßenabschnittsinformationen bewertet, insbesondere nach wenigstens einem Bewertungskriterium. Es können dann, z. B. gewichtet, die Ergebnisse der Bewertungen herangezogen werden, um die Straßenabschnittsinformation auszuwählen.

Es ist vorgesehen, dass bei dem Ermitteln wenigstens eine erste Beleuchtungsinformation über die Beleuchtung der Straßenabschnitte und zusätzlich wenigstens eine zweite Beleuchtungsinformation über eine Beleuchtung wenigstens einer Umgebung außerhalb der Straßenabschnitte ermittelt wird, wobei die Benutzervoreinstellung eine Vorgabe für eine minimale und/oder maximale Intensität der Beleuchtung der Umgebung umfasst, um diese Vorgabe bei der Bewertung zu berücksichtigen.

Vorteilhafterweise können die Straßenabschnittsinformationen für die Navigationsroute und/oder die Umgebung außerhalb der Straßenabschnitte jeweils in der Form einer digitalen Information über einen tatsächlich vorhandenen Straßenabschnitt und/oder einer tatsächlichen Umgebung bereitgestellt werden. Gemäß dem erfindungsgemäßen Verfahren kann daher das Bereitstellen der Straßenabschnittsinformationen und/oder auch der Umgebung dadurch erfolgen, dass die jeweilige Straßenabschnittsinformation und/oder die Umgebung aus einer digitalen Sammlung wie einer Datenbank oder einem Kartenmaterial ermittelt wird. Vorzugsweise werden hierbei mehrere Straßenabschnittsinformationen und/oder zumindest eine Umgebung bereitgestellt, welche zusammen eine mögliche Navigationsroute zu einem Zielort ergeben können. Bei dem Berechnen der Navigationsroute kann dann eine Auswahl aus den bereitgestellten Straßenabschnittsinformationen erfolgen, insbesondere nach bestimmten Bewertungskriterien (auch als Filterung bezeichnet), bspw. nach:
- der Befahrbarkeit des Straßenabschnittes durch das Fahrzeug, und/oder
- dem Vorliegen von Straßensperrungen und/oder Baustellen und/oder Staus am Straßenabschnitt, und/oder
- einer Straßenqualität des Straßenabschnitts, und/oder
- Behinderungen oder Gefahren wie Glätte am Straßenabschnitt, und/oder
- der Beleuchtung des Straßenabschnittes anhand der Beleuchtungsinformation, und/oder
- der Beleuchtung der Umgebung außerhalb des Straßenabschnittes, insbesondere angrenzend zum Straßenabschnitt, bevorzugt am oder angrenzend zum Zielort.

Die bereitgestellte Umgebung kann z. B. zusätzlich zur Fußgänger-Navigation dienen.

Die Bewertungskriterien können hierbei gewichtet und/oder priorisiert berücksichtigt werden. Zusätzlich können weitere benutzerspezifische Vorgaben berücksichtigt werden (keine Berücksichtigung von Autobahnen oder ähnliches). Im Übrigen kann die Berechnung der Navigationsroute so erfolgen, wie es bei herkömmlichen Navigationssystemen bekannt ist. Beispielsweise wird hierbei die Navigationsroute zur Zielführung von der aktuellen Position des Fahrzeuges zum Zielort berechnet. Die aktuelle Position wird bspw. mittels GPS (Global Positioning System) ermittelt. Die Navigationsroute kann sich hierzu aus mehreren (ausgewählten) Straßenabschnittsinformationen zusammensetzen. Der Zielort und/oder auch ein Interessensort kann bspw. ein Teil des wenigstens einen Straßenabschnitts sein bzw. daran angrenzen. Anschließend kann die Navigationsroute optional noch eine Fußgänger-Navigation in der Umgebung außerhalb des Straßenabschnitts umfassen.

Es kann möglich sein, dass die Beleuchtungsinformation in der Form von digitalen Daten zur Berücksichtigung der Beleuchtung vorgesehen sind. Diese Daten können als Fahrzeugflottendaten und/oder als Information über die Beleuchtungsintensität vorliegen. Beispielsweise kann bei verschiedenen Fahrzeugen ein jeweiliger Lichtsensor die Außenbeleuchtung dadurch erkennen, dass die Beleuchtungsintensität auf den Straßenabschnitten jeweils erfasst wird. Die erfassten Beleuchtungsintensitäten können dann an eine zentrale Verarbeitungsvorrichtung, insbesondere Datenanalyseplattform, übermittelt und ggf. ausgewertet werden, um die übermittelten und/oder ausgewerteten Beleuchtungsintensitäten als die Daten bereitzustellen. Die Auswertung ermöglicht es vorteilhafterweise, dass den Straßenabschnittsinformationen und/oder der Umgebung einer Navigationsroute die zugehörige Beleuchtung anhand der Beleuchtungsintensität zugewiesen wird. Weiter kann die unterschiedliche Beleuchtungsintensität in Abstufungen (Intervalle der Beleuchtungsintensität) durch das Navigationssystem visuell für den Benutzer in Navigationsrouten als Option (z. B. mit unterschiedlicher Farbgebung) angezeigt werden. Es kann bei dem Berechnen eine Navigationsroute mit der jeweils höchsten Beleuchtungsintensität auf den Straßenabschnitten berechnet und/oder ausgewählt werden, ggf. zusätzlich unter Berücksichtigung weiterer Faktoren, wie z. B. Straßenqualität, Glätte, und dergleichen.

Die Beleuchtungsinformation kann dadurch für die Beleuchtung des wenigstens einen Straßenabschnitts, und insbesondere zusätzlich für die Beleuchtung der wenigstens einer Umgebung außerhalb (und insbesondere angrenzend) des wenigstens einen Straßenabschnitts, spezifisch sein, dass die Beleuchtungsinformation wenigstens einen Wert als Information über die Beleuchtung, insbesondere in der Form wenigstens einer Beleuchtungsintensität, im Straßenabschnitt und/oder der Umgebung umfasst. Die Beleuchtungsinformation kann z. B. durch die Erfassung der Beleuchtungsintensität (z. B. durch Lichtsensoren weiterer Fahrzeuge) und/oder durch das Auslesen der Beleuchtungsintensität aus einer digitalen Datensammlung ermittelt werden. Damit kann die Beleuchtungsinformation das Kartenmaterial eines Navigationssystem um eine Information über die Beleuchtung ergänzen. Die Routenberechnung kann somit unter Berücksichtigung der Beleuchtung der Straßenabschnitte und/oder der Umgebung erfolgen.

Das erfindungsgemäße Verfahren kann vorteilhafterweise durch ein Navigationssystem eines Fahrzeuges oder durch ein mobiles Gerät wie ein Smartphone oder eine Smartwatch ausgeführt werden. Entsprechend kann eine erfindungsgemäße Vorrichtung auch als das mobile Gerät separat vom Fahrzeug ausgeführt sein, oder alternativ als das Navigationssystem in das Fahrzeug integriert sein.

Vorteilhaft ist es zudem, wenn das Fahrzeug als ein Kraftfahrzeug, insbesondere gleisloses Landkraftfahrzeug, ausgebildet ist. Es kann sich weiter bei dem Fahrzeug um ein Personenkraftfahrzeug oder Lastkraftfahrzeug handeln. Das Fahrzeug kann ferner auch als ein autonomes Fahrzeug ausgeführt sein, welches dazu geeignet ist, selbstständig zumindest entlang bestimmter Routen zu fahren.

Es ist vorgesehen, dass die Umgebung außerhalb des wenigstens einen Straßenabschnitts (für deren Beleuchtung die Beleuchtungsinformation spezifisch sein kann) in der Art einer durch einen Fahrer des Fahrzeuges, insbesondere ausschließlich, zu Fuß zu begehenden Umgebung vorgesehen ist, wobei vorzugsweise eine ausreichende Beleuchtung dieser Umgebung als ein Bewertungskriterium für das Berechnen verwendet wird. Eine ausreichende Beleuchtung kann z. B. dann vorgesehen sein, wenn ein vordefinierter Schwellenwert durch eine Intensität der Beleuchtung überschritten wird. Es kann vorgesehen sein, dass die Navigationsroute und/oder die Fahrzeugnavigation vorgibt, dass diese Umgebung nur zu Fuß zu begehen ist. Beispielsweise hat hierzu der Benutzer eine Zielführung am Navigationssystem so eingestellt, dass am Zielort eine teilweise Navigation zu Fuß zum endgültigen Ziel erfolgt, wenn das endgültige Ziel bspw. nicht befahrbar ist oder aufgrund eines Benutzerwunsches nicht befahren werden soll (z. B. wegen Stau oder dergleichen). Darüber hinaus kann die Befahrbarkeit der Umgebung auch grundsätzlich eingeschränkt oder verhindert sein, da dort bspw. keine Straße vorgesehen ist, und es sich z. B. um einen (reinen) Fußgängerweg handelt. Somit findet für das Berechnen auch die Beleuchtung in der Umgebung Berücksichtigung, in welcher das Fahrzeug nicht gefahren wird. Dies hat den Hintergrund, dass nach dem Parken im Zielort der Fahrer zu Fuß unterwegs sein kann, und es dann entsprechend auf eine ausreichende Beleuchtung in der Gegend am Zielort ankommt. Die Umgebung kann z. B. die Umgebung am Zielort der Fahrzeugnavigation umfassen, vorzugsweise in einem Radius von mindestens 10 m oder mindestens 100 m um den Zielort. Das Berechnen kann den Straßenabschnitt bzw. die Straßenabschnitte anschließend gemäß unterschiedlicher Bewertungskriterien bewerten, um diese anhand der Bewertung (bei positiver Bewertung) für die Navigationsroute auszuwählen. Eines dieser Bewertungskriterien kann dann die ausreichende Beleuchtung sein.

Weiter ist im Rahmen der Erfindung denkbar, dass die Beleuchtungsinformation eine Information über die Intensität der Beleuchtung aufweist, wobei vorzugsweise bei dem Berechnen eine Bewertung der wenigstens einen Straßenabschnittsinformation über den wenigstens einen Straßenabschnitt und/oder der Umgebung dadurch durchgeführt wird, dass gemäß einem Bewertungskriterium eine ausreichende Beleuchtung des wenigstens einen Straßenabschnitts und/oder der Umgebung, insbesondere angrenzend zum Straßenabschnitt, durch einen Vergleich der Intensität mit einer vorgegebenen Mindestintensität festgestellt wird. Die Mindestintensität kann voreingestellt sein, aber ggf. auch durch den Benutzer, insbesondere Fahrer, angepasst werden. Dies ermöglicht es, auch einen Benutzerwunsch bei der Bewertung der Straßenabschnittsinformationen zu berücksichtigen. Die Bewertung der Straßenabschnittsinformation kann gemäß dem Bewertungskriterium auch dadurch erfolgen, dass die ausreichende Beleuchtung der Umgebung festgestellt wird. Darunter ist insbesondere zu verstehen, dass die Beleuchtung derjenigen Umgebung berücksichtigt wird, die an der zu bewertenden Straßenabschnittsinformation angrenzt. Bspw. kann es sich dabei um den Straßenabschnitt handeln, in welchem der Fahrer den Parkvorgang durchführt (also das Fahrzeug parkt), um anschließend zu Fuß in die angrenzende Umgebung zu gelangen.

Im Rahmen der Erfindung kann die Bewertung von Straßenabschnittsinformationen - bei dem Berechnen - die Bewertung von
- einzelnen Straßenabschnittsinformationen,
- mehreren aufeinanderfolgenden Straßenabschnittsinformationen, oder auch
- ganzer alternativer Navigationsrouten
bezeichnen. Durch das Berechnen und insbesondere durch die Bewertung kann optional auch eine Einstufung für die Straßenabschnittsinformationen über Straßenabschnitte bzw. Navigationsrouten danach erfolgen, welche Intensität der Beleuchtung dort vorgesehen ist (z. B. eingeteilt in ausreichende Beleuchtung und unzureichender Beleuchtung). Die Einstufung kann z. B. danach erfolgen, ob in jedem der Straßenabschnitte die Beleuchtung einen vordefinierten Schwellenwert überschreitet. Dies kann es auch ermöglichen, durch das Berechnen mehrere alternative Navigationsrouten zu ermitteln, diese dem Benutzer (z. B. visuell oder akustisch) vorzuschlagen, und jeweils mit der zugehörigen Beleuchtung bzw. Einstufung zu kennzeichnen.

Des Weiteren ist es denkbar, dass die Umgebung außerhalb des wenigstens einen Straßenabschnitts an einem Zielort der Navigationsroute vorgesehen ist., insbesondere um die Navigationsroute dort als Fußgängernavigation bereitzustellen. Dies hat den Vorteil, dass gewährleistet werden kann, dass das Fahrzeug am Zielort in einer aktuell ausreichend beleuchteten Umgebung abgestellt wird. Der Zielort kann dabei Teil des Straßenabschnitts bzw. einer der Straßenabschnitte sein. Dabei ist es möglich, dass die Beleuchtungsinformation für die Beleuchtung der Umgebung im Sinne einer aktuellen Beleuchtung spezifisch ist. Entsprechend können somit nur Daten zur Ermittlung der Beleuchtungsinformation genutzt werden, welche eine vorgegebene Aktualität aufweisen. Auch können die Daten, welche die Beleuchtungsinformation bereitstellen, mit einem Ablaufzeitpunkt versehen sein. Unter der Umgebung an dem Zielort kann die Umgebung um einen bestimmten Radius um den Zielort verstanden werden, insbesondere ohne den Straßenabschnitt der Navigationsroute.

Bei dem Berechnen können neben der Beleuchtungsinformation optional noch weitere Informationen berücksichtigt werden, um die wenigstens eine Straßenabschnittsinformation zu bewerten. Beispielsweise kann die Anzahl der aktuell vorbeifahrenden Fahrzeuge berücksichtigt werden. Auch kann ein Kriterium eine Vorgabe durch den Benutzer, insbesondere Fahrer, sein. Diese Vorgabe ist bspw. eine Präferenz für den Zielort, wie ein Wunschparkplatz oder dergleichen. Auch kann es möglich sein, dass zeitliche Vorgaben berücksichtigt werden (z. B. wird ein Straßenabschnitt oder ein Zielort nur zu bestimmten Zeiten in Betracht gezogen oder höher priorisiert).

Es kann weiter möglich sein, dass die Umgebung außerhalb des wenigstens einen Straßenabschnitts an (wenigstens) einem Interessensort (z. B. angrenzend zur Navigationsroute und insbesondere einer der Straßenabschnitte der Navigationsroute) vorgesehen ist, wobei sich der Interessensort von einem Zielort der Navigationsroute unterscheidet. Dabei kann es möglich sein, dass als Navigationsroute eine Route von der aktuellen Position des Fahrzeuges zu einem Zielort vorgesehen ist, und der Interessensort (Point of Interest oder POI) außerhalb dieser Route liegt. Dennoch kann das Navigationssystem einen Wunsch des Fahrer berücksichtigen, eine weitere Navigation zu einem Interessensort durchzuführen. Dabei kann das Navigationssystem dem Fahrer auf Wunsch diesen Interessensort und/oder weitere Interessensorte vorschlagen. Hierbei kann optional eine Filterung nach einer ausreichenden Beleuchtung des Interessensort erfolgen. Ferner kann das Navigationssystem bereits bei dem Berechnen der Navigationsroute berücksichtigen, dass die Navigationsroute entlang eines POI führt, welcher eine ausreichende Beleuchtung aufweist.

Bevorzugt kann im Rahmen der Erfindung vorgesehen sein, dass die Umgebung außerhalb des wenigstens einen Straßenabschnitts innerhalb eines Bereichs liegt, welcher (insbesondere gemäß der Navigationsroute) nach einem Parkvorgang (z. B. am Ziel- oder Interessenort) durch einen Fahrer des Fahrzeuges außerhalb des Fahrzeuges begangen wird. Darunter ist zu verstehen, dass das Navigationssystem und/oder die Zielführung - also die Navigationsroute - davon ausgeht, dass der Fahrer nach Erreichen des Zielorts diesen Bereich betritt. Davon ist zwangsläufig auszugehen, wenn als dieser Bereich ein Gebiet mit einem bestimmten Radius um den Zielort gewählt wird.

In einer weiteren Möglichkeit kann vorgesehen sein, dass die Beleuchtungsinformation dadurch ermittelt wird, dass die Beleuchtungsinformation (insbesondere durch das Navigationssystem und/oder die erfindungsgemäße Vorrichtung, insbesondere durch ein Abrufmittel) von einer zentralen Verarbeitungsvorrichtung z. B. über ein Netzwerk außerhalb des Fahrzeuges abgerufen wird, wobei verschiedene Fahrzeuge jeweils durch wenigstens einen Lichtsensor eine Intensität der Beleuchtung im wenigstens einen Straßenabschnitt und/oder in der Umgebung außerhalb des Straßenabschnitts erfassen, und an die zentrale Verarbeitungsvorrichtung übertragen, um (insbesondere die Intensität als) die Beleuchtungsinformation für den Abruf bereitzustellen. Das Abrufmittel kann hierzu bspw. als eine Schnittstelle zu einem Netzwerk, insbesondere Mobilfunknetz und/oder Internet, ausgeführt sein. Ebenfalls kann es vorgesehen sein, dass die Beleuchtungsinformation dadurch bestimmt wird, dass Verkehrsdaten für Helligkeitskarten berücksichtigt werden. Es ist möglich, dass das Navigationssystem diese Verkehrsdaten und die damit verbundenen Helligkeiten für die Straßenabschnitte auch für einen Fahrer des Fahrzeuges visualisiert, z. B. auf einem Display im Fahrzeuginneren. Dabei ist es optional vorgesehen, dass ein Fahrer auch eine gewünschte Helligkeit eingeben kann, nach der die Berechnung einer Navigationsroute erfolgt. Besonders vorteilhaft ist es, wenn der Fahrer die gewünschte Helligkeit für die Umgebung außerhalb des Straßenabschnitts angeben kann, z. B. für die restliche Strecke zum Ziel, welche zu Fuß begangen werden muss. Dies hat den Vorteil, dass die Routenberechnung abhängig und/oder optimiert anhand der persönlichen gewünschten Helligkeit erfolgen kann. Zusätzlich können als Bewertungskriterium bei der Berechnung weitere Kriterien wie Zeit, ökologische und schadstoffoptimierte Routen und dergleichen priorisiert kombiniert werden.

Es kann möglich sein, dass ein Lichtsensor des Fahrzeuges automatisch und wiederholt während der Fahrt des Fahrzeuges die Beleuchtungsintensität für den gerade befahrenden Straßenabschnitt und/oder die Umgebung erfasst und automatisch an die zentrale Verarbeitungsvorrichtung überträgt. Damit kann stets eine aktuelle Beleuchtungsinformation über die Beleuchtung dieses Straßenabschnitts (anhand der Beleuchtungsintensität) bereitgestellt werden. Die auf diese Weise ermittelten Beleuchtungsinformationen können dabei auch für weitere Anwendungen genutzt werden. So ist es denkbar, dass anhand der Beleuchtungsinformationen eine automatische oder manuelle Steuerung der Straßenbeleuchtung oder Umgebungsbeleuchtung erfolgt. Diese Steuerung kann auf einer statistischen Auswertung der Beleuchtungsinformationen basieren. Auch ist es möglich, dass die Straßenbeleuchtung dynamisch im Bereich des Fahrzeuges bzw. im aktuell befahrenden Straßenabschnitt eingeschaltet wird. Der Lichtsensor ist bspw. als ein optischer Sensor ausgeführt, um die Beleuchtungsinformation anhand der Beleuchtungsintensität zu ermitteln. Es ist denkbar, dass der Lichtsensor als ein Regen-Licht-Sensor ausgeführt ist. Dieser Lichtsensor ist insbesondere im Bereich der Frontscheibe vorgesehen, um das Abblendlicht des Fahrzeuges einzuschalten, wenn eine Umgebungshelligkeit unterhalb eines Schwellenwertes fällt.

Auch kann es möglich sein, dass wenigstens ein Sensor zur Abstands- und insbesondere auch Geschwindigkeitsmessung des Fahrzeuges und/oder ein Radar und/oder Lidar und/oder Ultraschall-Sensor des Fahrzeuges als Lichtsensor genutzt wird. Diese können es jeweils ermöglichen, Informationen über die Verkehrsdichte und/oder Anzahl der Personen in der Umgebung des Fahrzeuges zu erhalten, und damit indirekt auf die Beleuchtungsintensität zu schließen. Auf diese Weise kann die Beleuchtungsintensität durch die Information des Lichtsensors (z. B. über die Verkehrsdichte und/oder die Anzahl der Personen) festgelegt werden, bspw. als hierzu proportionaler Wert. Die Beleuchtungsinformation kann diesen Wert als Information über die Beleuchtung umfassen, um für die Beleuchtung des Straßenabschnitts und/oder der Umgebung spezifisch zu sein. Auch kann das Fahrzeug und/oder der Lichtsensor einen GPS-Sensor umfassen, um anhand der aktuellen Position des Fahrzeuges den aktuellen Straßenabschnitt zu identifizieren, auf dem sich das Fahrzeug befindet, und damit die Zuordnung der Information über die Beleuchtung zum Straßenabschnitt und/oder zur dazu angrenzenden Umgebung vorzunehmen.

Zusätzlich kann eine visuelle Darstellung der Beleuchtungsinformationen durch das Navigationssystem, z. B. in Navigationskarten, möglich sein, z. B. durch Markierungen mit verschiedenen Farben.

Gemäß einer vorteilhaften Weiterbildung der Erfindung kann vorgesehen sein, dass das Bereitstellen der wenigstens einen Straßenabschnittsinformation und/oder das Berechnen der Navigationsroute durch ein Navigationssystem (des Fahrzeuges und/oder eines mobilen Geräts) zur Fahrzeugnavigation in Abhängigkeit von einem (durch einen Benutzer) eingegebenen Zielort der Fahrzeugnavigation erfolgt, und/oder dass bei dem Berechnen anhand der ermittelten Beleuchtungsinformation die ausreichende Beleuchtung des Straßenabschnitts und/oder der Umgebung (z. B angrenzend zum Straßenabschnitt) bewertet wird, um vorzugsweise anschließend anhand der Bewertung (insbesondere bei positiver Bewertung) der ausreichenden Beleuchtung den Straßenabschnitt und/oder Umgebung für die Fahrzeugnavigation und/oder für die Navigationsroute auszuwählen. In anderen Worten kann es vorgesehen sein, dass die Bewertung positiv ist, wenn anhand der Beleuchtungsinformation die ausreichende Beleuchtung des Straßenabschnitts und/oder der Umgebung festgestellt wird, um dann mit diesem Straßenabschnitt und/oder dieser Umgebung die Navigationsroute für die Fahrzeugnavigation zu bilden. Dagegen können Straßenabschnitte und/oder Umgebungen mit nicht ausreichender Beleuchtung hierzu unberücksichtigt bleiben, oder nur dann berücksichtigt werden, wenn eine Alternative mit ausreichender Beleuchtung fehlt. Damit kann eine Zielführung zum Zielort durch das Navigationssystem durchgeführt werden, welche die Beleuchtung der Straßenabschnitte berücksichtigt. Die Umgebung kann z. B. als zu Fuß zu begehender Abschnitt Teil der Fahrzeugnavigation und/oder Navigationsroute sein.

Ebenfalls Gegenstand der Erfindung ist eine Vorrichtung, insbesondere ein Navigationssystem eines Fahrzeuges und/oder ein mobiles Gerät, zur Bestimmung einer Navigationsroute eines (des) Fahrzeuges, aufweisend:
- ein, vorzugsweise elektronisches, Verarbeitungsmittel, insbesondere mit einem Prozessor, zum Bereitstellen wenigstens einer oder mehrerer Straßenabschnittsinformation(en) jeweils über wenigstens einen durch das Fahrzeug zu befahrenden und/oder befahrbaren Straßenabschnitts für die Navigationsroute,
- ein, vorzugsweise elektronisches, Abrufmittel, insbesondere zur drahtlosen Datenkommunikation und/oder mit einem Prozessor, zum Ermitteln wenigstens einer Beleuchtungsinformation für die Navigationsroute, wobei die ermittelte Beleuchtungsinformation für eine Beleuchtung des wenigstens einen Straßenabschnitts bzw. der Straßenabschnitte und insbesondere zusätzlich für die Beleuchtung wenigstens einer Umgebung außerhalb des wenigstens einen Straßenabschnitts spezifisch ist,
- ein, vorzugsweise elektronisches, Berechnungsmittel, insbesondere mit einem Prozessor, zum Berechnen der Navigationsroute anhand der wenigstens einen bereitgestellten Straßenabschnittsinformation bzw. der bereitgestellten Straßenabschnittsinformationen und der ermittelten Beleuchtungsinformation.

Weiter ist es vorgesehen, dass das Berechnungsmittel dafür ausgebildet ist, bei dem Berechnen der Navigationsroute durch einen Vergleich einer Benutzervoreinstellung mit der wenigstens einen ermittelten Beleuchtungsinformation eine Auswahl und Bewertung der bereitgestellten Straßenabschnittsinformationen für die Bestimmung der Navigationsroute durchzuführen. Hierzu kann das Berechnungsmittel bspw. ein Computerprogramm ausführen, welches Befehle umfasst, die bei der Ausführung des Computerprogramms durch das Berechnungsmittel dieses veranlassen, das Berechnen in der angegebenen Art durchzuführen. Damit bringt die erfindungsgemäße Vorrichtung die gleichen Vorteile mit sich, wie sie ausführlich mit Bezug auf ein erfindungsgemäßes Verfahren beschrieben worden sind. Zudem kann die Vorrichtung dazu ausgeführt sein, ein erfindungsgemäßes Verfahren auszuführen.

Das Verarbeitungsmittel und/oder das Abrufmittel und/oder das Berechnungsmittel können jeweils einzeln oder gemeinsam als Computer zur Datenverarbeitung ausgebildet sein. Daher kann die erfindungsgemäße Vorrichtung auch zur Ausführung des erfindungsgemäßen Verfahrens dadurch geeignet sein, dass durch die erfindungsgemäße Vorrichtung ein Computerprogramm, insbesondere Computerprogrammprodukt, ausführbar ist, welches Befehle aufweist, die bei der Ausführung des Computerprogramms die erfindungsgemäße Vorrichtung veranlassen, ein erfindungsgemäßes Verfahren auszuführen. Das Computerprogram kann hierzu nicht-flüchtig in der Vorrichtung gespeichert sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung zur Visualisierung eines erfindungsgemäßen Verfahrens,
- Figur 2: eine schematische Darstellung eines Fahrzeuges mit einer erfindungsgemäßen Vorrichtung,
- Figur 3: eine weitere schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

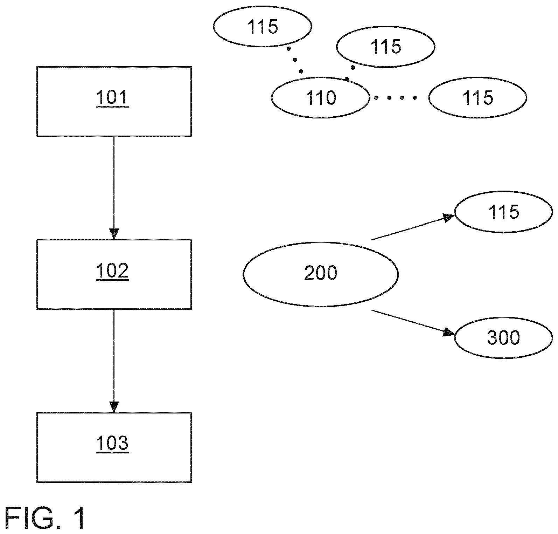

In Figur 1 schematisch ein erfindungsgemäßes Verfahren zur Bestimmung einer Navigationsroute 110 für ein Fahrzeug 1 visualisiert. Hierbei kann gemäß einem ersten Verfahrensschritt 101 wenigstens ein durch das Fahrzeug 1 zu befahrender Straßenabschnitt 115 für die Navigationsroute 110 durch eine Straßenabschnittsinformation bereitgestellt werden. Neben diesem zu befahrenden Straßenabschnitt können ggf. noch weitere Straßenabschnitte durch weitere Straßenabschnittsinformationen bereitgestellt sein, welche jedoch nicht für die Navigationsroute 110 relevant sein können. Anschließend kann gemäß einem zweiten Verfahrensschritt 102 ein Ermitteln wenigstens einer Beleuchtungsinformation 200 für die Navigationsroute 110 durchgeführt werden. Die hierbei ermittelte Beleuchtungsinformation 200 kann für eine Beleuchtung der wenigstens einen bereitgestellten Straßenabschnittsinformation und optional zusätzlich für die Beleuchtung wenigstens einer Umgebung 300 außerhalb des wenigstens einen bereitgestellten Straßenabschnitts 115 spezifisch sein. Nach dem ersten und zweiten Verfahrensschritt kann gemäß einem dritten Verfahrensschritt 103 ein Berechnen der Navigationsroute 110 anhand der wenigstens einen bereitgestellten Straßenabschnittsinformation und der ermittelten Beleuchtungsinformation 200 erfolgen. Hier wird abschließend also die Navigationsroute 110 unter Berücksichtigung der Beleuchtung der wenigstens einen bereitgestellten Straßenabschnittsinformation und ggf. zusätzlich der Beleuchtung der wenigstens einen Umgebung 300 außerhalb der wenigstens einen bereitgestellten Straßenabschnittsinformation bestimmt. Diese Berücksichtigung der Beleuchtung kann auch als Beleuchtungskriterium aufgefasst werden, bei welcher eine ausreichende Beleuchtung z. B. anhand eines Schwellenwertes für die Beleuchtungsintensität untersucht wird. Anschließend können optional noch weitere alternative Navigationsrouten 110 bestimmt werden, bei denen das Beleuchtungskriterium z. B. mit einer anderen Gewichtung berücksichtigt wird. Das Beleuchtungskriterium ist damit eine bestimmte Art von Bewertungskriterium für die Bewertung der Straßenabschnitte.

Es ist erfindungsgemäß vorgesehen, dass eine Benutzervoreinstellung bereitgestellt wird, wobei bei dem Berechnen 103 der Navigationsroute 110 durch einen Vergleich der Benutzervoreinstellung mit der wenigstens einen ermittelten Beleuchtungsinformation 200 eine Auswahl und Bewertung der bereitgestellten Straßenabschnittsinformationen für die Bestimmung der Navigationsroute 110 durchgeführt wird. Damit kann die gewünschte Helligkeit für die Navigation durch einen Benutzer des Fahrzeuges ausgewählt und voreingestellt werden.

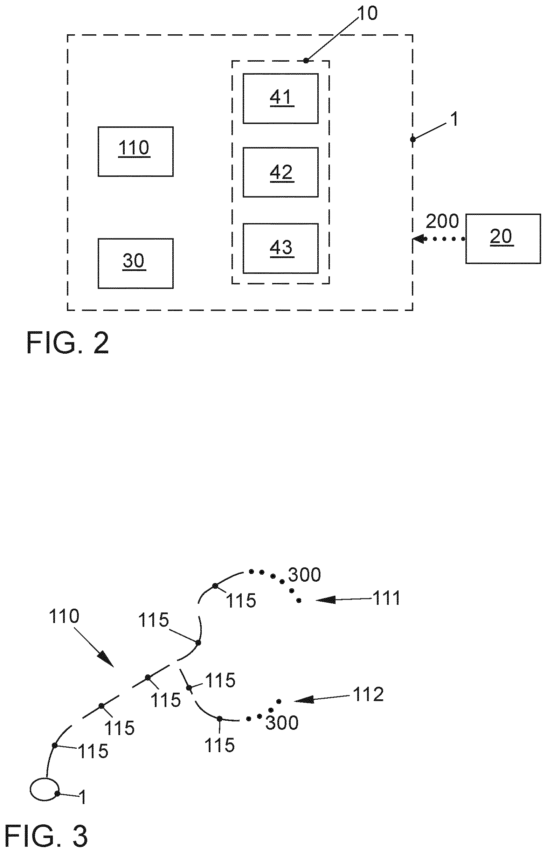

Gemäß Figur 2 kann es vorgesehen sein, dass die Beleuchtungsinformation 200 dadurch ermittelt wird, dass die Beleuchtungsinformation 200 von einer zentralen Verarbeitungsvorrichtung 20 abgerufen wird, wobei verschiedene Fahrzeuge 1 jeweils durch wenigstens einen Lichtsensor 30 eine Intensität der Beleuchtung im wenigstens einen Straßenabschnitt 115 erfassen, und an die zentrale Verarbeitungsvorrichtung 20 übertragen, um die Beleuchtungsinformation 200 für den Abruf bereitzustellen.

Wie anhand Figur 3 deutlich wird, kann die Umgebung 300 außerhalb des wenigstens einen Straßenabschnitts 115 in der Art einer durch einen Fahrer des Fahrzeuges 1, insbesondere ausschließlich, zu Fuß zu begehenden Umgebung 300 vorgesehen sein, wobei eine ausreichende Beleuchtung der Umgebung 300 als ein Bewertungskriterium für das Berechnen 103 verwendet werden kann. Die zu Fuß begehbare Strecke ist hierbei durch eine gepunktete Linie veranschaulicht. Die Umgebung 300 außerhalb des wenigstens einen Straßenabschnitts 115 kann um einen Zielort 111 der Navigationsroute 110, aber auch innerhalb eines Interessensorts 112 angrenzend zur Navigationsroute 110 vorgesehen sein, wobei sich der Interessensort 112 von dem Zielort 111 der Navigationsroute 110 unterscheidet. Auch ist es denkbar, dass die Umgebung 300 außerhalb des wenigstens einen Straßenabschnitts 115 innerhalb eines Bereichs liegt, welcher nach einem Parkvorgang durch einen Fahrer des Fahrzeuges 1 außerhalb des Fahrzeuges 1 begangen wird. In der Darstellung in Figur 3 kann der Parkvorgang z. B. am Ende der durchgehenden Linien stattfinden.

In Figur 2 ist ferner eine Vorrichtung 10, insbesondere ein Navigationssystem eines Fahrzeuges 1 oder mobiles Gerät, zur Bestimmung einer Navigationsroute 110 eines Fahrzeuges 1 gezeigt. Die Vorrichtung 10 kann ein Verarbeitungsmittel 41 zum Bereitstellen 101 wenigstens einer Straßenabschnittsinformation über wenigstens einen durch das Fahrzeug 1 zu befahrenden Straßenabschnitt 115 für die Navigationsroute 110 aufweisen. Weiter kann ein Abrufmittel 42 zum Ermitteln 102 wenigstens einer Beleuchtungsinformation 200 für die Navigationsroute 110 genutzt werden, wobei die ermittelte Beleuchtungsinformation 200 für eine Beleuchtung des wenigstens einen Straßenabschnitts 115 und ggf. zusätzlich für die Beleuchtung wenigstens einer Umgebung 300 außerhalb des wenigstens einen Straßenabschnitts 115 spezifisch ist. Außerdem kann ein Berechnungsmittel 43 zum Berechnen 103 der Navigationsroute 110 anhand des wenigstens einen bereitgestellten Straßenabschnitts 115 und der ermittelten Beleuchtungsinformation 200 in die Vorrichtung 10 integriert sein.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug

- 10: Vorrichtung

- 20: Verarbeitungsvorrichtung

- 30: Lichtsensor

- 41: Verarbeitungsmittel
- 42: Abrufmittel
- 43: Berechnungsmittel

- 101: erster Verfahrensschritt, Bereitstellen
- 102: zweiter Verfahrensschritt, Ermitteln
- 103: dritter Verfahrensschritt, Berechnen
- 110: Navigationsroute
- 111: Zielort
- 112: Interessensort, POI
- 115: Straßenabschnitt

- 200: Beleuchtungsinformation

- 300: Umgebung

## Patentansprüche

1. Verfahren zur Bestimmung einer Navigationsroute (110) für ein Fahrzeug (1),
bei welchem die nachfolgenden Schritte durchgeführt werden:
- Bereitstellen (101) mehrerer Straßenabschnittsinformationen jeweils über wenigstens einen durch das Fahrzeug (1) zu befahrenden Straßenabschnitt (115) für die Navigationsroute (110),
- Ermitteln (102) wenigstens einer Beleuchtungsinformation (200) für die Navigationsroute (110), wobei die wenigstens eine ermittelte Beleuchtungsinformation (200) für eine Beleuchtung der Straßenabschnitte (115) spezifisch ist,
- Berechnen (103) der Navigationsroute (110) anhand der bereitgestellten Straßenabschnittsinformationen und der ermittelten Beleuchtungsinformation (200),
wobei eine Benutzervoreinstellung bereitgestellt wird, und wobei bei dem Berechnen (103) der Navigationsroute (110) durch einen Vergleich der Benutzervoreinstellung mit der wenigstens einen ermittelten Beleuchtungsinformation (200) eine Auswahl und Bewertung der bereitgestellten Straßenabschnittsinformationen für die Bestimmung der Navigationsroute (110) durchgeführt wird,
wobei die Benutzervoreinstellung eine Vorgabe für eine minimale und/oder maximale Intensität der Beleuchtung der Umgebung umfasst, um diese Vorgabe bei der Bewertung zu berücksichtigen,
**dadurch gekennzeichnet,**
**dass** bei dem Ermitteln (102) wenigstens eine erste Beleuchtungsinformation (200) über die Beleuchtung der Straßenabschnitte (115) und zusätzlich wenigstens eine zweite Beleuchtungsinformation (200) über eine Beleuchtung wenigstens einer Umgebung (300) außerhalb der Straßenabschnitte (115) ermittelt wird, und dass die Umgebung (300) außerhalb der Straßenabschnitte (115) in der Art einer durch einen Fahrer des Fahrzeuges (1) zu Fuß zu begehenden Umgebung (300) vorgesehen ist, wobei eine ausreichende Beleuchtung der Umgebung (300) als ein Bewertungskriterium für das Berechnen (103) verwendet wird.

2. Verfahren nach Anspruch 1,
**dadurch gekennzeichnet,**
**dass** die Benutzervoreinstellung eine Vorgabe für eine maximale Intensität der Beleuchtung umfasst, um diese Vorgabe bei der Auswahl und Bewertung zu berücksichtigen.

3. Verfahren nach Anspruch 1 oder 2,
**dadurch gekennzeichnet,**
**dass** die Benutzervoreinstellung als eine Voreinstellung für eine Mehrzahl von Berechnungen (103) der Navigationsroute verwendet wird, um bei den Berechnungen (103) eine minimale und/oder maximale Intensität der Beleuchtung voreinzustellen, um für die Auswahl und Bewertung die wenigstens eine voreingestellte Intensität mit der Beleuchtung zu vergleichen.

4. Verfahren nach einem der vorhergehenden Ansprüche,
**dadurch gekennzeichnet,**
**dass** die Umgebung (300) außerhalb der Straßenabschnitte (115) an einem Zielort (111) der Navigationsroute (110) vorgesehen ist, um die Navigationsroute (110) dort als Fußgängernavigation bereitzustellen.

5. Verfahren nach einem der vorhergehenden Ansprüche,
**dadurch gekennzeichnet,**
**dass** die Umgebung (300) außerhalb der Straßenabschnitte (115) innerhalb eines Bereichs liegt, welcher nach einem Parkvorgang durch einen Fahrer des Fahrzeuges (1) außerhalb des Fahrzeuges (1) begangen wird.

6. Verfahren nach einem der vorhergehenden Ansprüche,
**dadurch gekennzeichnet,**
**dass** die Beleuchtungsinformation (200) dadurch ermittelt wird, dass die Beleuchtungsinformation (200) von einer zentralen Verarbeitungsvorrichtung (20) abgerufen wird, wobei verschiedene Fahrzeuge (1) jeweils durch wenigstens einen Lichtsensor (30) eine Intensität der Beleuchtung im wenigstens einen Straßenabschnitt (115) erfassen, und an die zentrale Verarbeitungsvorrichtung (20) übertragen, um die Beleuchtungsinformation (200) für den Abruf bereitzustellen.

7. Verfahren nach einem der vorhergehenden Ansprüche,
**dadurch gekennzeichnet,**
**dass** das Bereitstellen (101) der Straßenabschnittsinformationen und/oder das Berechnen (103) der Navigationsroute (110) durch ein Navigationssystem (10) zur Fahrzeugnavigation in Abhängigkeit von einem eingegebenen Zielort (111) der Fahrzeugnavigation erfolgt, und dass bei dem Berechnen (103) anhand der wenigstens einen ermittelten Beleuchtungsinformation (200) eine ausreichende Beleuchtung der Straßenabschnitte (115) bewertet wird, um anschließend anhand der Bewertung der ausreichenden Beleuchtung die Straßenabschnittsinformationen für die Fahrzeugnavigation auszuwählen.

8. Vorrichtung (10) zur Bestimmung einer Navigationsroute (110) eines Fahrzeuges (1), aufweisend:
- ein Verarbeitungsmittel (41) zum Bereitstellen (101) mehrerer Straßenabschnittsinformationen jeweils über wenigstens einen durch das Fahrzeug (1) zu befahrenden Straßenabschnitt (115) für die Navigationsroute (110),
- ein Abrufmittel (42) zum Ermitteln (102) wenigstens einer Beleuchtungsinformation (200) für die Navigationsroute (110), wobei die wenigstens eine ermittelte Beleuchtungsinformation (200) für eine Beleuchtung der Straßenabschnitte (115) spezifisch ist,
- ein Berechnungsmittel (43) zum Berechnen (103) der Navigationsroute (110) anhand der bereitgestellten Straßenabschnittsinformationen und der ermittelten Beleuchtungsinformation (200),
**dadurch gekennzeichnet,**
**dass** das Berechnungsmittel (43) dafür ausgebildet ist, bei dem Berechnen (103) der Navigationsroute (110) durch einen Vergleich einer Benutzervoreinstellung mit der wenigstens einen ermittelten Beleuchtungsinformation (200) eine Auswahl und Bewertung der bereitgestellten Straßenabschnittsinformationen für die Bestimmung der Navigationsroute (110) durchzuführen,
und **dass** die Vorrichtung (10) dazu ausgeführt ist, ein Verfahren nach einem der Ansprüche 1 bis 7 auszuführen.

## Claims

1. Method for determining a navigation route (110) for a vehicle (1), in which the following steps are carried out:
- providing (101) a plurality of items of road portion information each about at least one road portion (115) to be traveled by the vehicle (1) for the navigation route (110),
- determining (102) at least one item of illumination information (200) for the navigation route (110), the at least one determined item of illumination information (200) being specific to an illumination of the road portions (115),
- calculating (103) the navigation route (110) based on the provided road portion information and the determined illumination information (200),
a user preset being provided, and, when calculating (103) the navigation route (110), a selection and evaluation of the provided road portion information for determining the navigation route (110) being carried out by comparing the user preset with the at least one determined item of illumination information (200),
the user preset comprising a specification for a minimum and/or maximum intensity of the illumination of the environment in order to take this specification into account in the evaluation, **characterized in that** during the determination (102) at least a first item of illumination information (200) about the illumination of the road portions (115) and additionally at least a second item of illumination information (200) about an illumination of at least one environment (300) outside the road portions (115) is determined,
and **in that** the environment (300) outside the road portions (115) is provided in the manner of an environment (300) to be walked through by a driver of the vehicle (1), sufficient illumination of the environment (300) being used as an evaluation criterion for the calculation (103).

2. Method according to claim 1,
**characterized**
**in that** the user preset comprises a specification for a maximum intensity of the illumination in order to take this specification into account in the selection and evaluation.

3. Method according to either claim 1 or claim 2,
**characterized**
**in that** the user preset is used as a preset for a plurality of calculations (103) of the navigation route in order to preset a minimum and/or maximum intensity of the illumination in the calculations (103) in order to compare the at least one preset intensity with the illumination for the selection and evaluation.

4. Method according to any of the preceding claims,
**characterized**
**in that** the environment (300) outside the road portions (115) is provided at a destination (111) of the navigation route (110) in order to provide the navigation route (110) there as pedestrian navigation.

5. Method according to any of the preceding claims,
**characterized**
**in that** the environment (300) outside the road portions (115) lies within an area which is walked on by a driver of the vehicle (1) outside the vehicle (1) after a parking operation.

6. Method according to any of the preceding claims,
**characterized**
**in that** the illumination information (200) is determined by retrieving the illumination information (200) from a central processing device (20), different vehicles (1) each detecting an intensity of the illumination in at least one road portion (115) by means of at least one light sensor (30) and transmitting it to the central processing device (20) in order to provide the illumination information (200) for retrieval.

7. Method according to any of the preceding claims,
**characterized**
**in that** the provision (101) of the road portion information and/or the calculation (103) of the navigation route (110) by a navigation system (10) for vehicle navigation takes place depending on an entered destination (111) of the vehicle navigation, and **in that** during the calculation (103) sufficient illumination of the road portions (115) is evaluated based on the at least one determined item of illumination information (200) in order to subsequently select the road portion information for the vehicle navigation based on the evaluation of the sufficient illumination.

8. Device (10) for determining a navigation route (110) of a vehicle (1), comprising:
- a processing means (41) for providing (101) a plurality of items of road portion information each about at least one road portion (115) to be traveled by the vehicle (1) for the navigation route (110),
- a retrieval means (42) for determining (102) at least one item of illumination information (200) for the navigation route (110), the at least one determined item of illumination information (200) being specific to illumination of the road portions (115),
- a calculation means (43) for calculating (103) the navigation route (110) based on the provided road portion information and the determined illumination information (200),
**characterized**
**in that** the calculation means (43) is designed to carry out a selection and evaluation of the provided road portion information for determining the navigation route (110) when calculating (103) the navigation route (110) by comparing a user preset with the at least one determined item of illumination information (200),
and **in that** the device (10) is designed to carry out a method according to any of claims 1 to 7.

## Revendications

1. Procédé pour la détermination d'un itinéraire de navigation (110) pour un véhicule (1), dans lequel les étapes suivantes sont effectuées :
- la fourniture (101) de plusieurs informations de tronçon de route respectivement concernant au moins un tronçon de route (115) à parcourir par le véhicule (1) pour l'itinéraire de navigation (110),
- la détermination (102) d'au moins une information d'éclairage (200) pour l'itinéraire de navigation (110), dans lequel l'au moins une information d'éclairage (200) déterminée est spécifique à un éclairage des tronçons de route (115),
- le calcul (103) de l'itinéraire de navigation (110) à l'aide des informations de tronçon de route fournies et de l'information d'éclairage (200) déterminée,
dans lequel un préréglage utilisateur est fourni et dans lequel, lors du calcul (103) de l'itinéraire de navigation (110), une sélection et une évaluation des informations de tronçon de route fournies sont effectuées pour la détermination de l'itinéraire de navigation (110) par une comparaison du préréglage utilisateur avec l'au moins une information d'éclairage (200) déterminée,
dans lequel le préréglage utilisateur comprend une consigne pour une intensité minimale et/ou maximale de l'éclairage de l'environnement, afin de tenir compte de cette consigne lors de l'évaluation, **caractérisé en ce que** lors de la détermination (102), au moins une première information d'éclairage (200) concernant l'éclairage des tronçons de route (115) et en outre au moins une seconde information d'éclairage (200) concernant un éclairage d'au moins un environnement (300) en dehors des tronçons de route (115) sont déterminées,
**et que** l'environnement (300) est prévu en dehors des tronçons de route (115) à la manière d'un environnement (300) à parcourir à pied par un conducteur du véhicule (1), dans lequel un éclairage suffisant de l'environnement (300) est utilisé comme critère d'évaluation pour le calcul (103).

2. Procédé selon la revendication 1,
**caractérisé en ce**
**que** le préréglage utilisateur comprend une consigne pour une intensité maximale de l'éclairage, afin de tenir compte de cette consigne lors de la sélection et de l'évaluation.

3. Procédé selon la revendication 1 ou 2,
**caractérisé en ce**
**que** le préréglage utilisateur est utilisé comme un préréglage pour une pluralité de calculs (103) de l'itinéraire de navigation, pour prérégler une intensité minimale et/ou maximale de l'éclairage lors des calculs (103), afin de comparer, pour la sélection et l'évaluation, ladite au moins une intensité préréglée à l'éclairage.

4. Procédé selon l'une des revendications précédentes,
**caractérisé en ce**
**que** l'environnement (300) est prévu à l'extérieur des tronçons de route (115) au niveau d'une destination (111) de l'itinéraire de navigation (110) pour y fournir l'itinéraire de navigation (110) en tant que navigation piétonne.

5. Procédé selon l'une des revendications précédentes,
**caractérisé en ce**
**que** l'environnement (300) se trouve, en dehors des tronçons de route (115), à l'intérieur d'une zone qui, après une opération de stationnement, est parcourue par un conducteur du véhicule (1) en dehors du véhicule (1).

6. Procédé selon l'une des revendications précédentes,
**caractérisé en ce**
**que** l'information d'éclairage (200) est déterminée par le fait que l'information d'éclairage (200) est appelée par un dispositif de traitement central (20), dans lequel différents véhicules (1) détectent respectivement par au moins un capteur de lumière (30) une intensité de l'éclairage dans au moins un tronçon de route (115), et la transmettent au dispositif de traitement central (20) afin de fournir l'information d'éclairage (200) pour l'appel.

7. Procédé selon l'une des revendications précédentes,
**caractérisé en ce**
**que** la fourniture (101) des informations de tronçons de route et/ou le calcul (103) de l'itinéraire de navigation (110) est effectué par un système de navigation (10) pour la navigation du véhicule en fonction d'un lieu de destination (111) entré de la navigation du véhicule, **et que** lors du calcul (103), un éclairage suffisant des tronçons de route (115) est évalué à l'aide de l'au moins une information d'éclairage (200) déterminée, pour sélectionner ensuite les informations de tronçons de route pour la navigation du véhicule à l'aide de l'évaluation de l'éclairage suffisant.

8. Dispositif (10) pour la détermination d'un itinéraire de navigation (110) d'un véhicule (1), présentant :
- un moyen de traitement (41) pour la fourniture (101) de plusieurs informations de tronçon de route, respectivement concernant au moins un tronçon de route (115) à parcourir par le véhicule (1), pour l'itinéraire de navigation (110),
- un moyen d'appel (42) pour la détermination (102) d'au moins une information d'éclairage (200) pour l'itinéraire de navigation (110), dans lequel l'au moins une information d'éclairage (200) déterminée est spécifique à un éclairage des tronçons de route (115),
- un moyen de calcul (43) pour le calcul (103) de l'itinéraire de navigation (110) à l'aide des informations de tronçon de route fournies et de l'information d'éclairage (200) déterminée,
**caractérisé en ce**
**que** le moyen de calcul (43) est conçu pour effectuer, lors du calcul (103) de l'itinéraire de navigation (110), une sélection et une évaluation des informations de tronçon de route fournies pour la détermination de l'itinéraire de navigation (110) par une comparaison d'un préréglage utilisateur avec l'au moins une information d'éclairage (200) déterminée,
**et que** le dispositif (10) est conçu pour réaliser un procédé selon l'une des revendications 1 à 7.
